# EUROPÄISCHE PATENTANMELDUNG

(11) **EP 2 264 274 A2**
(43) Veröffentlichungstag der Anmeldung: **22.12.2010**
(21) Anmeldenummer: 10005333.9
(22) Anmeldetag: 21.05.2010
(51) Int. Cl.: E06C 1/12

(54) **Teleskopierbare Leiter**

(30) Priorität: 05.06.2009 DE 202009007991 U
(71) Anmelder: Ovibell Pflanzen, Deko und Freizeit GmbH & Co. KG, 45479 Mülheim an der Ruhr (DE)
(72) Erfinder: Zimmermann, Dirk, 40489 Düsseldorf (DE)
(74) Vertreter: Gottschald, Jan

(57) **Zusammenfassung**

Die Erfindung betrifft eine teleskopierbare Leiter mit zwei nebeneinanderliegenden Holmen (1) und zwischen den Holmen (1) angeordneten Sprossen (2), wobei die Holme (1) jeweils aus einer Mehrzahl von im Wesentlichen rohrförmigen, teleskopartig ineinanderlaufenden Holmabschnitten (3) bestehen, wobei nebeneinanderliegende Holmabschnitte (3) jeweils über eine Sprosse (2) miteinander verbunden sind. Es wird vorgeschlagen, dass die in einen jeweils nächsttieferen Holmabschnitt (3) einfahrbaren Holmabschnitte (3) jeweils eine Verriegelungseinheit (4) aufweisen, mit denen die Holmabschnitte (3) gegen den jeweils nächsttieferen Holmabschnitt (3) in der jeweils ausgefahrenen Stellung verriegelbar sind, dass den beiden Holmen (1) jeweils eine manuelle Betätigungseinrichtung (5) zum Lösen der Vernegelungseinheiten (4) zugeordnet sind und dass die Betätigungseinrichtung (5) eine Betätigungswelle (6) aufweist, die längs innerhalb des jeweiligen Holms (1) verläuft und die insbesondere in Abhängigkeit von der Teleskopierlage der Leiter in Eingriff mit mindestens einer Verriegelungseinheit (4) steht oder bringbar ist.

## Beschreibung

Die vorliegende Erfindung betrifft eine teleskopierbare Leiter gemäß dem Oberbegriff von Anspruch 1.

Teleskopierbare Leitern finden heute in allen Bereichen Anwendung, in denen eine hohe Flexibilität gefordert ist und nur wenig Stauraum zur Verfügung steht. Vorliegend steht in diesem Rahmen der Haushaltsbereich im Vordergrund. Dies ist aber nicht beschränkend zu verstehen.

Die bekannte Leiter (EP 0 527 766 B1), von der die Erfindung ausgeht, ist in üblicher Weise mit zwei nebeneinanderliegenden Holmen und mit zwischen den Holmen angeordneten Sprossen ausgestaltet. Die Holme bestehen jeweils aus einer Mehrzahl von rohrförmigen Holmabschnitten, die teleskopartig ineinanderlaufen. Zwei nebeneinanderliegende Holmabschnitte sind jeweils über eine Sprosse miteinander verbunden.

Durch die teleskopartig ineinanderlaufenden Holmabschnitte lässt sich die Leiter insgesamt in eine eingefahrene Stellung und in eine ausgefahrene Stellung bringen. In der eingefahrenen Stellung sind alle Holmabschnitte so ineinander verschachtelt, dass mit Ausnahme der untersten Sprosse alle Sprossen aneinanderliegen. In der eingefahrenen Stellung ist die Leiter kompakt und lässt sich gut transportieren und verstauen.

In den Sprossen finden sich jeweils Verriegelungseinheiten, mit denen die der Sprosse zugeordneten Holmabschnitte gegenüber dem jeweils nächsthöheren Holmabschnitt verriegelbar sind. Damit lässt sich die Leiter insgesamt in ihrer ausgefahrenen Stellung verriegeln.

Für das Lösen der Verriegelung ist es bei der bekannten Leiter vorgesehen, dass das Zusammenlegen zweier Sprossen mit dem Lösen der Verriegelung der Holmabschnitte einhergeht, die der nächsthöheren Sprosse zugeordnet sind. So lässt sich das Einfahren der Leiter im Sinne eines Domino-Effekts erreichen. Nachteilig bei der bekannten Leiter ist die Tatsache, dass sich das Einfahren der Leiter nicht beliebig steuern lässt. Einmal gelöst, muss die Leiter stets in die voll eingefahrene Stellung gebracht werden. Dies ist hinsichtlich des Benutzungskomforts und hinsichtlich der Benutzersicherheit nachteilig.

Der Erfindung liegt das Problem zugrunde, die bekannte teleskopierbare Leiter derart auszugestalten und weiterzubilden, dass der Benutzungskomfort und die Benutzersicherheit erhöht werden.

Das obige Problem wird bei einer Leiter gemäß dem Oberbegriff von Anspruch 1 durch die Merkmale des kennzeichnenden Teils von Anspruch 1 gelöst.

Zunächst wird vorgeschlagen, dass die Holmabschnitte jeweils eine Verriegelungseinheit aufweisen, mit denen die Holmabschnitte gegen den jeweils nächsttieferen Holmabschnitt in der jeweils ausgefahrenen Stellung verriegelbar sind.

Wesentlich ist nun die Erkenntnis, dass sich die Verriegelungseinheiten auf einfache Weise mittels einer Betätigungswelle lösen lassen, die längs innerhalb des jeweiligen Holms verläuft und die in Eingriff mit mindestens einer Verriegelungseinheit steht oder bringbar ist. Die Betätigungswelle ist entsprechend einer manuellen Betätigungseinrichtung zugeordnet.

Von besonderem Vorteil bei der vorschlagsgemäßen Lösung ist die Tatsache, dass die Betätigungswelle gezielt in Eingriff mit vorbestimmten Verriegelungseinheiten gebracht werden kann, und zwar in Abhängigkeit von der Teleskopierlage der Leiter. Damit lässt sich eine besonders komfortable Benutzungssystematik einstellen, wie noch gezeigt wird.

Bei der bevorzugten Ausgestaltung gemäß Anspruch 5 steht die Betätigungswelle mit der Verriegelungseinheit des obersten ausgefahrenen Holmabschnitts, und nicht mit Verriegelungseinheiten anderer ausgefahrener Holmabschnitte in Eingriff. Dies bedeutet, dass mittels der Betätigungswelle ausschließlich der jeweils oberste ausgefahrene Holmabschnitt lösbar ist. Dies bedeutet wiederum, dass das Einfahren der Leiter mittels der Betätigungseinrichtung Sprosse für Sprosse, beginnend mit der obersten Sprosse, in der Reihenfolge von oben nach unten schrittweise erfolgt. Jeder Schritt ist mit einer Betätigung der Betätigungseinrichtung verbunden. Das Einfahren der Leiter kann damit jederzeit zur weiteren Nutzung der Leiter unterbrochen werden.

Bei der weiter bevorzugten Ausgestaltung gemäß Anspruch 8 ist es so, dass beim Einfahren eines Holmabschnitts dessen Verriegelungseinheit in Eingriff mit der Verriegelungseinheit des nächsttieferen Holmabschnitts kommt, wobei beim anschließenden Betätigungsschritt diese beiden Vernegelungseinheiten miteinander gekuppelt werden. Gemäß einer weiteren bevorzugten Ausgestaltung sind dann die Verriegelungseinheiten aller eingefahrenen Holmabschnitte miteinander gekuppelt.

Mit der letztgenannten, bevorzugten Variante lässt sich leicht erreichen, dass sich bei nicht ganz ausgefahrener Leiter ein zusammenhängendes, nicht auftrennbares Sprossenpaket ausschließlich am oberen Ende der Leiter bilden kann. Dies entspricht auch den geltenden Sicherheitsbestimmungen, da ein solches, am unteren Ende der Leiter befindliches Sprossenpaket eine Stolperfalle für den Benutzer bilden kann.

Im Folgenden wird die Erfindung anhand eines Ausführungsbeispiels näher erläutert. In der Zeichnung zeigt
- Fig. 1: eine vorschlagsgemäße Leiter a) in der eingefahrenen Stellung, b) in einer teilweise eingefahrenen Stellung und c) in der ausgefahre- nen Stellung, jeweils in einer Seitenansicht,
- Fig. 2: den oberen Abschnitt der Leiter gemäß Fig. 1 in einer perspektivi- schen Darstellung,
- Fig. 3: eine beispielhafte Darstellung des schrittweisen Einfahrens der Lei- ter gemäß Fig. 1 a) in der ausgefahrenen Stellung, b) in einer teil- weise eingefahrenen Stellung und c) in der eingefahrenen Stellung, jeweils in einer perspektivischen Darstellung,
- Fig. 4: die Leiter gemäß Fig. 1 a) in der eingefahrenen Stellung und b) in einer teilweise eingefahrenen Stellung, jeweils in einer teilweise ge- schnittenen Seitenansicht,
- Fig. 5: die Leiter gemäß Fig. 1 in der ausgefahrenen Stellung in einer teil- weise geschnittenen Seitenansicht,
- Fig. 6: zwei nebeneinander angeordnete, durch eine Sprosse verbundene Holmabschnitte der Leiter gemäß Fig. 1,
- Fig. 7: einen Holm der Leiter gemäß Fig. 1 im Bereich A a) ohne Betäti- gung und b) bei nur die Blockierung aufhebender Betätigung, je- weils in einer teilweise geschnittenen Seitenansicht,
- Fig. 8: einen Holm der Leiter gemäß Fig. 1 im Bereich A a) bei die Verrie- gelung lösender Betätigung und b) während des Einfahrens des dort oberen Holmabschnitts, jeweils in einer teilweise geschnittenen Sei- tenansicht,
- Fig. 9: einen Holm der Leiter gemäß Fig. 1 im Bereich B nach dem Einfah- ren des dort oberen Holmabschnitts a) ohne Betätigung und b) bei nur die Blockierung aufhebender Betätigung, jeweils in einer teil- weise geschnittenen Seitenansicht,
- Fig. 10: einen Holm der Leiter gemäß Fig. 1 im Bereich B a) nach dem Ein- fahren des dort oberen Holmabschnitts bei die Verriegelung lösen- der Betätigung und b) beim Einfahren des dort unteren Holmab- schnitts, jeweils in einer teilweise geschnittenen Seitenansicht,
- Fig. 11: eine Verriegelungseinheit der Leiter gemäß Fig. 1 in einer ersten Explosionsdarstellung und
- Fig. 12: die Verriegelungseinheit gemäß Fig. 11 in einer zweiten Explosi- onsdarstellung.

Die vorschlagsgemäße Leiter ist in an sich üblicher Weise mit zwei nebeneinanderliegenden Holmen 1 und zwischen den Holmen 1 angeordneten Sprossen 2 ausgestattet.

Im Sinne einer vereinfachten Darstellung ist im Folgenden stellenweise die Rede von nur einem einzigen Holm 1. Da die beiden Holme 1 identisch aufgebaut sind, gelten alle Ausführungen aber stets für beide Holme 1.

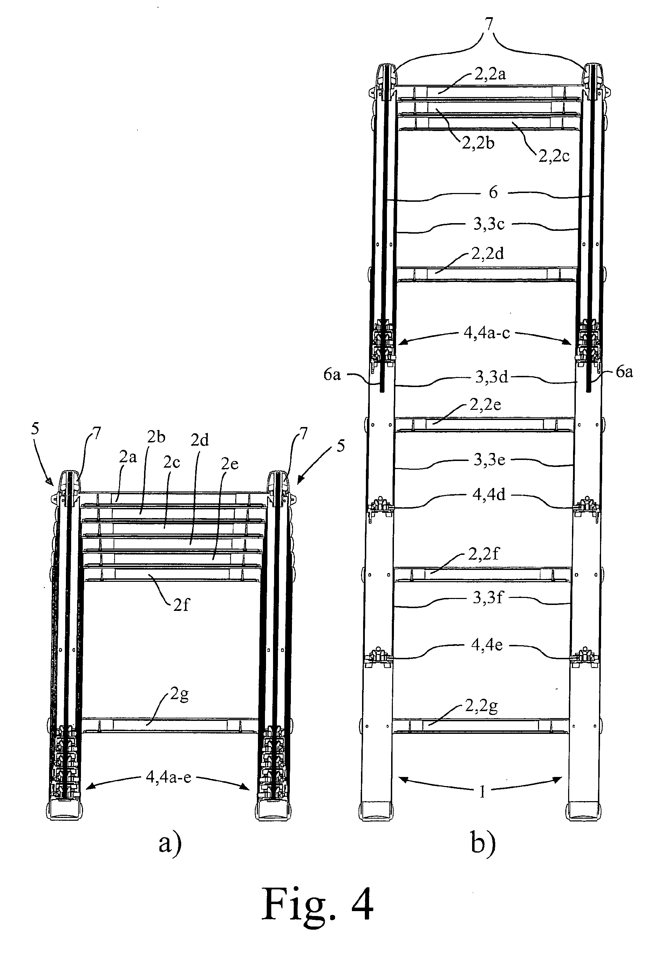

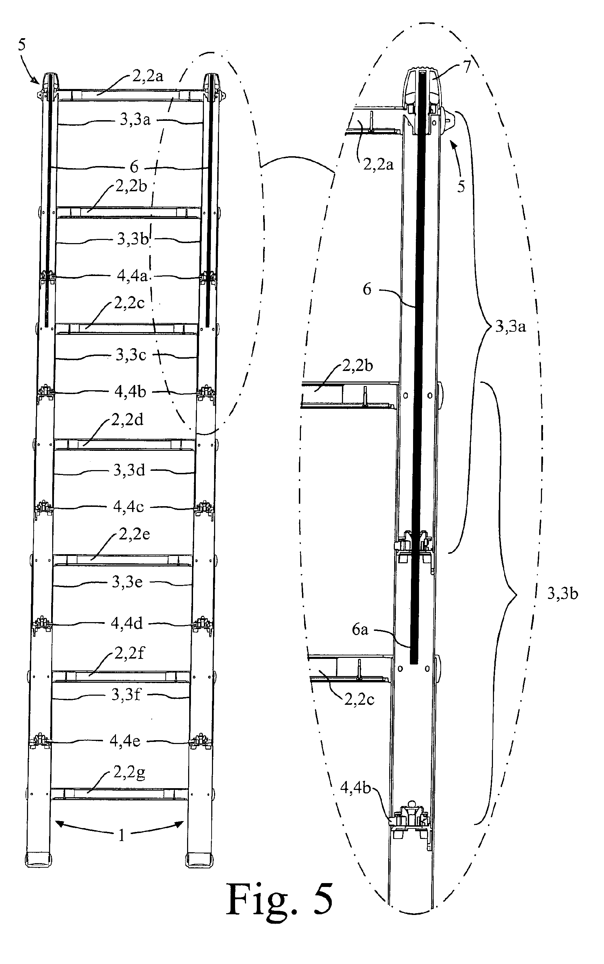

Es darf weiter darauf hingewiesen werden, dass für Sprossen 2, Holmabschnitte 3 und Verriegelungseinheiten 4 vorliegend grundsätzlich die Bezugszeichen 2, 3 und 4 verwendet werden. Stellenweise werden aber auch die spezifischen, in den Fig. 4 und 5 angegebenen Bezugszeichen 2a, 2b.., 3a, 3b.., 4a, 4b.. genutzt, um spezielle Sachverhalte erläutern zu können.

Schließlich darf darauf hingewiesen werden, dass mit der Formulierung "Einfahren eines Holmabschnitts 3" gemeint ist, dass der betreffende Holmabschnitt 3 in den nächsttieferen Holmabschnitt 3 teleskopartig eingefahren wird. Andere Holmabschnitte 3 sind hiervon nicht betroffen.

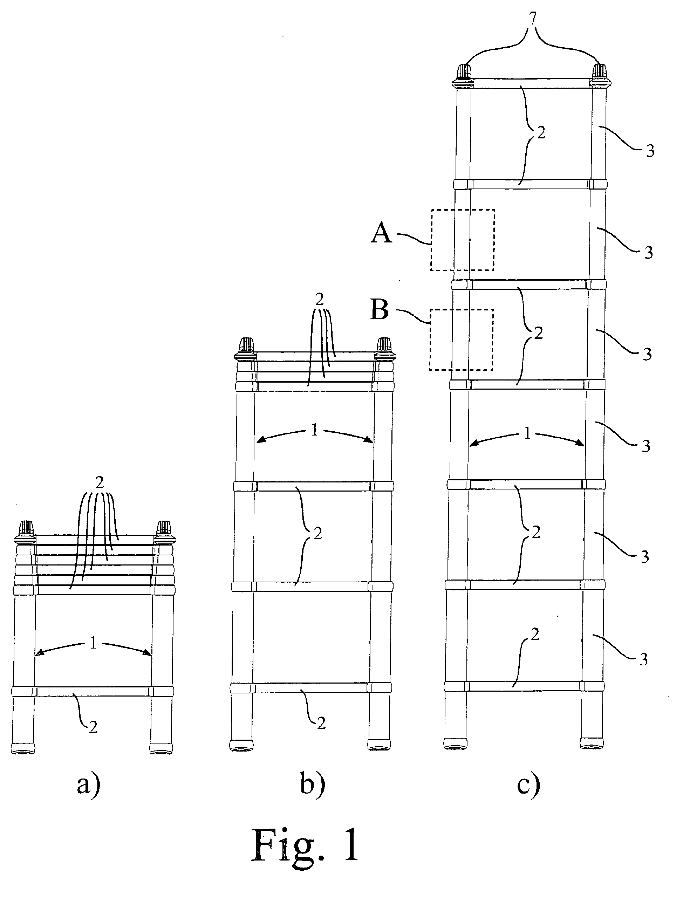

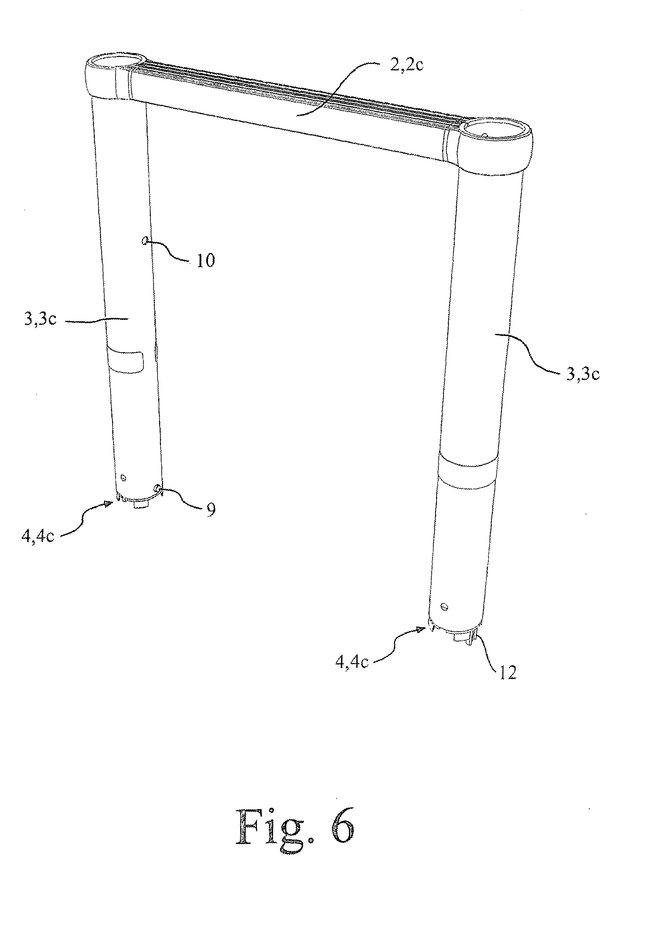

Die Holme 1 bestehen jeweils aus einer Mehrzahl von im Wesentlichen rohrförmigen, teleskopartig ineinanderlaufenden Holmabschnitten 3, wobei nebeneinanderliegende Holmabschnitte 3 jeweils über eine Sprosse 2 miteinander verbunden sind. Dies ist einer Zusammenschau der Fig. 1 und 6 zu entnehmen.

Die Holmabschnitte 3 weisen jeweils eine Verriegelungseinheit 4 auf, mit denen die Holmabschnitte 3 gegen den jeweils nächsttieferen Holmabschnitt 3 in der jeweils ausgefahrenen Stellung verriegelbar sind. Eine Ausnahme bildet der feststehende Holmabschnitt 3f, der selbstredend in keinen nächsttieferen Holmabschnitt einfahrbar ist. Schließlich handelt es sich hier um den untersten Holmabschnitt 3f, dem ein Fußelement der Leiter zugeordnet ist. Die beiden untersten Holmabschnitte 3f sind zusätzlich durch eine Anfangssprosse 2g miteinander verbunden (Fig. 5).

Mit Ausnahme der untersten Holmabschnitte 3f erstrecken sich alle Holmabschnitte 3 von der zugeordneten Sprosse 2 nach unten bis zu der zugeordneten Verriegelungseinheit 4. Die Verriegelungseinheiten 4 sind also vorzugsweise am unteren Ende der jeweiligen Holmabschnitte 3 angeordnet. Dies ist auch in Fig. 6 gezeigt. Aus der Darstellung in Fig. 5 ergibt sich entsprechend die Erstreckung aller übrigen Holmabschnitte 3.

Fig. 1a) zeigt die eingefahrene Stellung der Leiter, bei der alle Holmabschnitte 3 eingefahren sind. Fig. 1b) zeigt eine teilweise eingefahrene Stellung, bei denen nur die Holmabschnitte 3a-c eingefahren sind und bei der die übrigen Holmabschnitte 3d, e gegen die jeweils nächsttieferen Holmabschnitte 3e, f verriegelt sind. Fig. 1c) zeigt die ausgefahrene Stellung der Leiter, bei der die Holmabschnitte 3a-e mit den jeweils nächsttieferen Holmabschnitten 3b-f verriegelt sind.

Interessant ist vorliegend die Tatsache, dass den beiden Holmen 1 jeweils eine manuelle Betätigungseinrichtung 5 zum Lösen der Verriegelungseinheiten 4 zugeordnet sind und dass die Betätigungseinrichtung 5 eine Betätigungswelle 6 aufweist, die längs innerhalb des jeweiligen Holms 1 verläuft und die insbesondere in Abhängigkeit von der Teleskopierlage der Leiter in Eingriff mit mindestens einer Verriegelungseinheit 4 steht oder bringbar ist. Eine Zusammenschau der Fig. 4 und 5 zeigt, dass die Betätigungswelle 6 je nach Teleskopierlage der Leiter nur mit der Verriegelungseinheit 4a oder mit weiteren Verriegelungseinheiten 4 in Eingriff stehen kann.

Um den obigen Eingriff der Betätigungswelle 6 in Abhängigkeit von der Teleskopierlage der Leiter bewerkstelligen zu können, ist es zunächst vorgesehen, dass die Vernegelungseinheiten 4 starr mit den Holmabschnitten 3 im Übrigen verbunden sind. Wird also ein Holmabschnitt 3 ein- oder ausgefahren, so vollzieht die dazugehörige Verriegelungseinheit 4 dieselbe Bewegung.

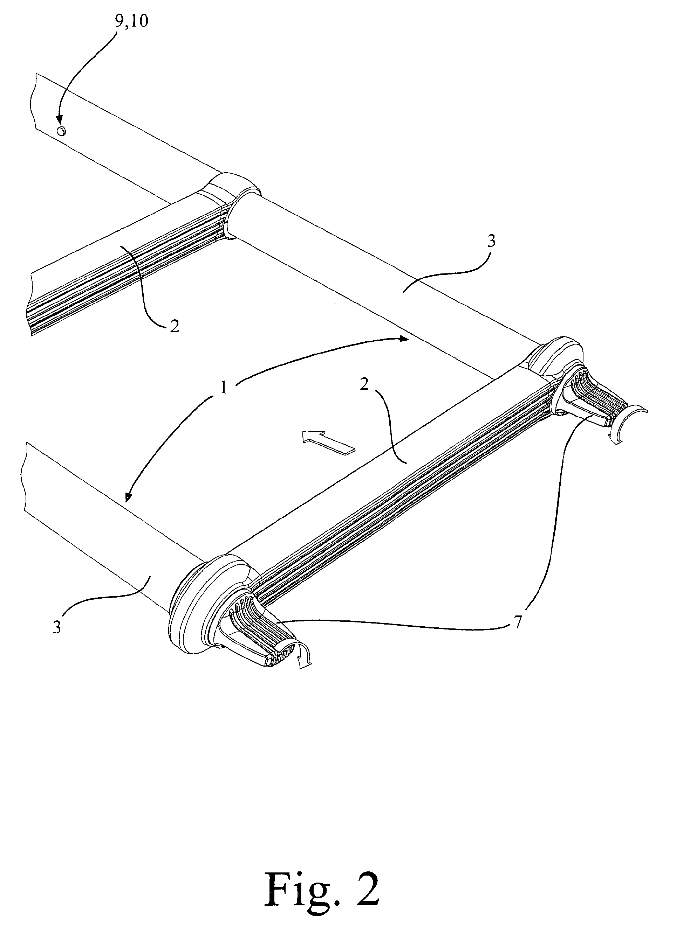

Interessant bei der Anwendung der obigen Betätigungswelle 3 ist ferner die Tatsache, dass die Betätigung vorzugsweise vom oberen Ende der Leiter aus erfolgt. Vor diesem Hintergrund weist die Betätigungseinrichtung 5 am oberen Ende des jeweiligen Holms 1 jeweils einen Dreh-Betätigungsgriff 7 auf, der antriebstechnisch mit der Betätigungswelle 6 gekoppelt ist. Hier und vorzugsweise ist der Dreh-Betätigungsgriff 7 schlicht auf die Betätigungswelle 6 aufgesetzt. Eine Drehung des Dreh-Betätigungsgriffs 7 führt entsprechend zu einer Drehung der Betätigungswelle 6 und im Ergebnis zu dem Lösen der jeweiligen Verriegelungseinheiten 4. Die Dreh-Betätigungsbewegung sowie die anschließende Einfahrbewegung sind in Fig. 2 durch Pfeile dargestellt. Von dem Begriff Drehbewegung sind hier ganz allgemein sowohl Drehbewegungen im engeren Sinne als auch Schwenkbewegungen erfasst.

Es ergibt sich aus der Darstellung in Fig. 5, dass sich die Betätigungswelle 6 dort vom oberen Ende des jeweiligen Holms 1 mit einem freien Ende 6a nach unten hin erstreckt, wobei hier und vorzugsweise die Betätigungswelle 6 im obersten Holmabschnitt 3a axialfest und drehbar gelagert ist. Hier ist es also so, dass die Betätigungswelle 6 dem Einfahren des obersten Holmabschnitts 3a folgt.

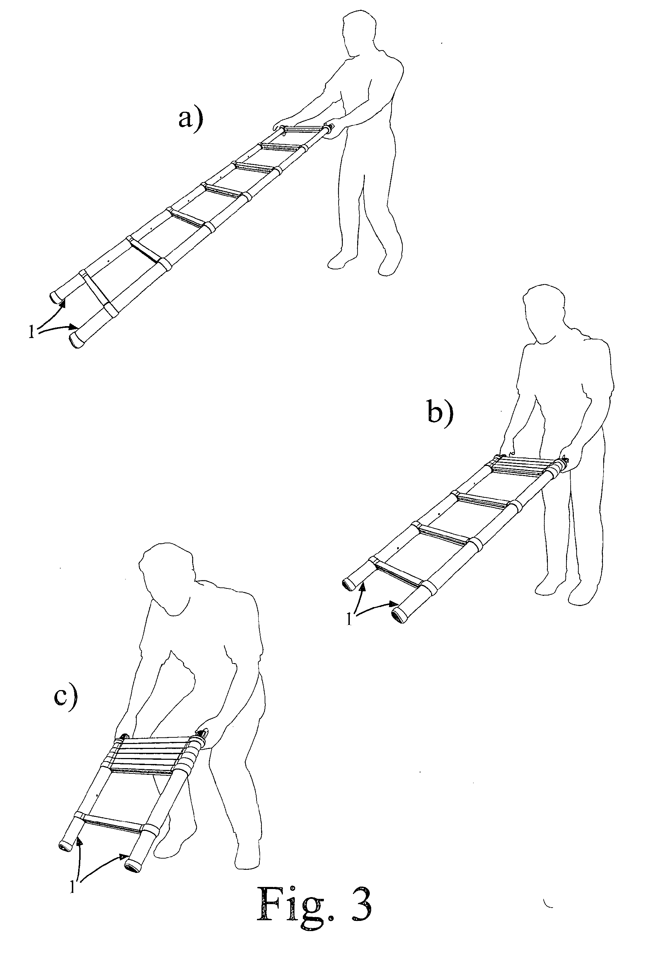

Der Ablauf beim Einfahren der Leiter mittels der am oberen Ende der Leiter angeordneten Dreh-Betätigungsgriffe 7 zeigt Fig. 3. Ausgehend von der ausgefahrenen Stellung (Fig. 3a)) betätigt der Benutzer beide Drehgriffe 7 gleichzeitig gemäß der Darstellung in Fig. 2. Während des Einfahrens der obersten Holmabschnitte 3a löst er die Betätigung, wodurch der Dreh-Betätigungsgriff 7 und die Betätigungswelle 6 vorzugsweise zurückschnappen. Wenn die oberste Sprosse 2a dann auf die nächsttiefere Sprosse 2b trifft, führt er einen weiteren Betätigungsschritt durch, wodurch die nächsttieferen Holmabschnitte 3b gelöst werden. Der Vorgang wiederholt sich, bis über die in Fig. 3b) dargestellte Stellung schließlich die feststehende Sprosse 2f erreicht ist.

Es ergibt sich bereits aus der obigen Erläuterung, dass der Auslegung der Länge der Betätigungswelle 6 für die Funktion der Leiter eine ganz besondere Bedeutung zukommt. Hier und vorzugsweise ist es so, dass die Betätigungswelle 6 insbesondere hinsichtlich ihrer Länge so ausgelegt ist, dass sie mit der Verriegelungseinheit 4 des jeweils obersten ausgefahrenen Holmabschnitts 3, und nicht mit Verriegelungseinheiten 4 anderer ausgefahrener Holmabschnitte 3 in Eingriff steht. Damit ist sichergestellt, dass mit der Betätigungseinrichtung 5 ausschließlich der jeweils oberste ausgefahrene Holmabschnitt 3 lösbar ist. Dies entspricht dem in Fig. 3 dargestellten Ablauf beim Einfahren der Leiter.

Die Länge der Holmabschnitte 3 beträgt vorzugsweise etwa das 1,5-fache der Entfernung zweier Sprossen 2 bei ausgefahrener Leiter. Damit ist eine Überlappung der Holmabschnitte 3 von etwa der halben Entfernung zweier Sprossen 2 sichergestellt, was für die Stabilität der Leiter von Bedeutung ist. Alternativ oder zusätzlich kann es vorgesehen sein, dass die Länge der Betätigungswelle etwa das 2-fache der Entfernung zweier Sprossen 2 bei ausgefahrener Leiter beträgt. Jedenfalls ist es hier zwangsläufig so, dass die Länge der Betätigungswelle 6 kleiner als die Höhe der in der eingefahrenen Stellung befindlichen Leiter ist.

Ausgehend von der in Fig. 5 dargestellten, ausgefahrenen Stellung der Leiter bewirkt eine Betätigung der Betätigungseinrichtung 5 nun ein Lösen der Verriegelungseinheit 4a und damit ein Lösen des Holmabschnitts 3a. Der Holmabschnitt 3a lässt sich zusammen mit der Betätigungswelle 6 einfahren, wodurch die Betätigungswelle 6 in Eingriff mit der Verriegelungseinheit 4b des nächsttieferen Holmabschnitts 3b kommt. Eine Zusammenschau der Fig. 4 und 5 zeigt, dass dabei hier und vorzugsweise die Betätigungswelle 6 mit ihrem freien Ende 6a die Verriegelungseinheit 4b durchdringt. Eine anschließende Betätigung der Betätigungseinrichtung 5 führt dann entsprechend zu einem Lösen der Verriegelungseinheit 4b und des dazugehörigen Holmabschnitts 3b.

An dieser Darstellung wird deutlich, warum die Betätigungswelle 6 mit ihrem freien Ende 6a die jeweilige Verriegelungseinheit 4 durchdringen muss. Andernfalls könnte die Betätigungswelle 6 nicht mit der jeweils nächsttieferen Verriegelungseinheit 4 in Eingriff kommen.

Bei dem obigen Einfahren bildet sich am oberen Ende der Leiter ein zusammenhängendes Sprossenpaket, das vorzugsweise nicht auftrennbar ist. Um dies zu erreichen, ist es vorzugsweise vorgesehen, dass die Verriegelungseinheiten 4 der Holmabschnitte 3 jeweils eine aktivierbare Kupplungseinheit 8 für deren Kupplung mit einer weiteren Verriegelungseinheit 4 aufweisen. Bei dieser weiteren Verriegelungseinheit 4 handelt es sich hier und vorzugsweise stets um die Verriegelungseinheit 4 des nächsthöheren, eingefahrenen Holmabschnitts 3. Dabei sind die Verriegelungseinheiten 4a der obersten Holmabschnitte 3a nicht mit einer solchen Kupplungseinheit 8 ausgestattet. Die Kupplung wirkt hier in Erstreckungsrichtung des jeweils Holms 1.

Besonders interessant bei dem dargestellten Ausführungsbeispiel ist die Tatsache, dass das Lösen einer Verriegelungseinheit 4 durch die Betätigungseinrichtung 5 mit einer Aktivierung der Kupplungseinheit 8 einhergeht. Dies wird im Folgenden am Beispiel des Einfahrens der Holmabschnitte 3a, 3b ausgehend von der ausgefahrenen Leiter gemäß Fig. 5 erläutert.

Beim Einfahren des Holmabschnitts 3a kommt dessen Verriegelungseinheit 4a in Eingriff mit der Verriegelungseinheit 4b des nächsttieferen Holmabschnitts 3b, wobei ein anschließendes Lösen der unteren der beiden Verriegelungseinheiten 4a, 4b, hier also der Verriegelungseinheit 4b, durch die Betätigungseinrichtung 5 ein Kuppeln der beiden Verriegelungseinheiten 4a, 4b miteinander und damit ein Kuppeln der zugeordneten Holmabschnitte 3a, 3b miteinander bewirkt. Dadurch, dass hier und vorzugsweise die Verriegelungseinheiten 4 derjenigen Holmabschnitte 3, die nicht in der ausgefahrenen Stellung stehen, stets gelöst sind und dass die entsprechenden Kupplungseinheiten 8 dabei entsprechend stets aktiviert sind, bleibt es beim anschließenden weiteren Einfahren der Leiter bei der Kupplung der beiden Verriegelungseinheiten 4a, 4b miteinander. Die beiden Verriegelungseinheiten 4a, 4b kommen beim weiteren Einfahren der Leiter in Eingriff mit der Verriegelungseinheit 4c des nächsttieferen Holmabschnitts 3c und werden bei einer anschließenden Betätigung durch die Betätigungseinrichtung 5 entsprechend mit dieser Verriegelungseinheit 4c gekuppelt.

Aus der obigen Erläuterung ergibt sich, dass hier und vorzugsweise die Verriegelungseinheiten 4 aller eingefahrenen Holmabschnitte 3 miteinander gekuppelt sind und weiter, dass die Verriegelungseinheiten 4 aller eingefahrenen Holmabschnitte 3 von der Betätigungswelle 6 durchdrungen sind. Dies macht auch eine Zusammenschau der Fig. 4 und 5 deutlich.

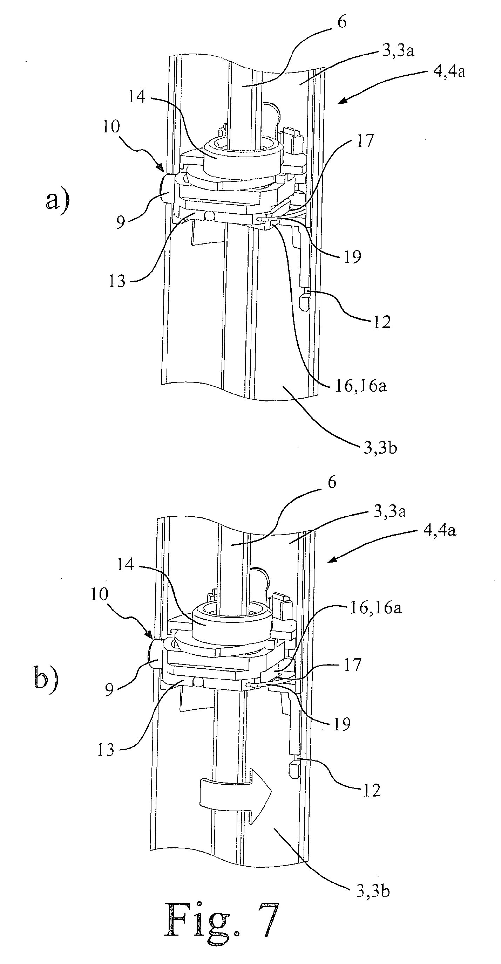

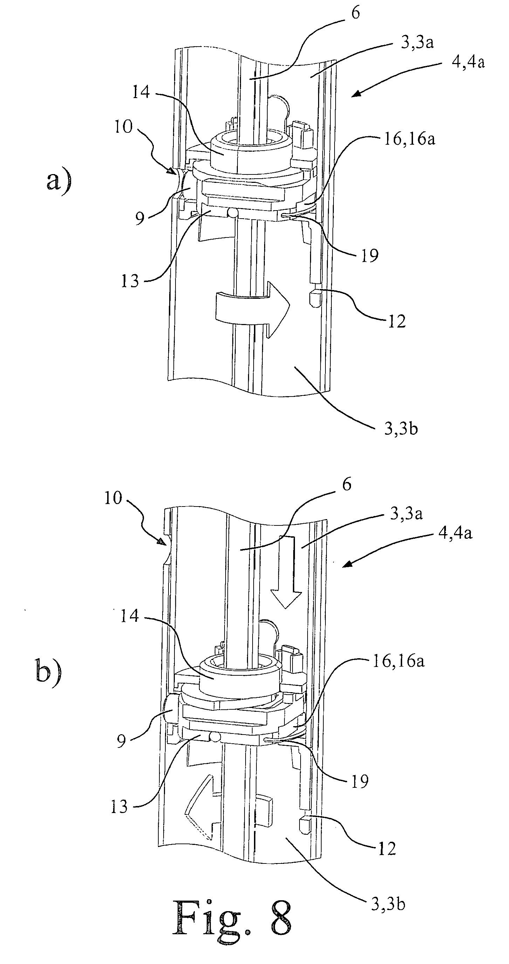

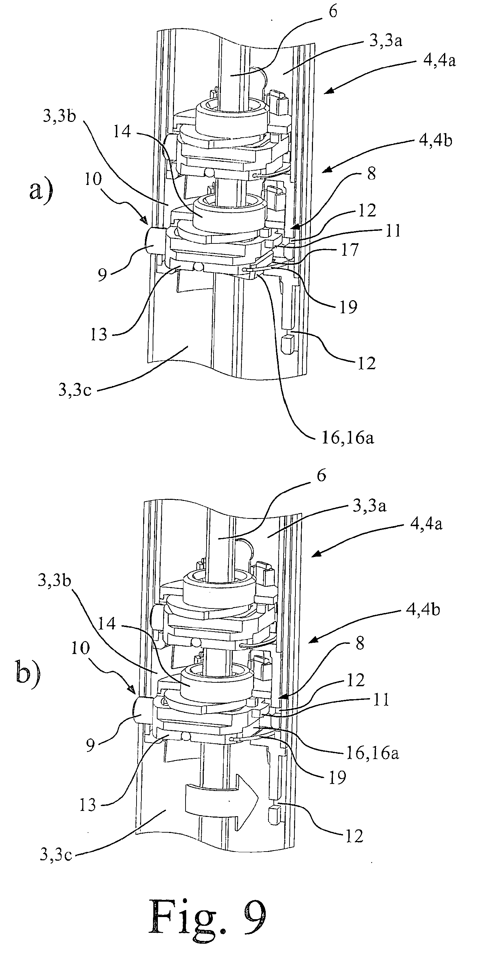

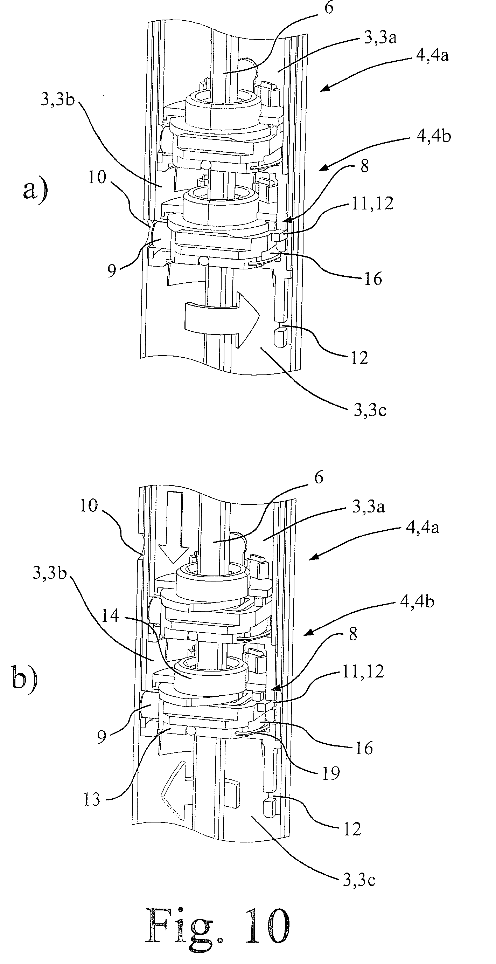

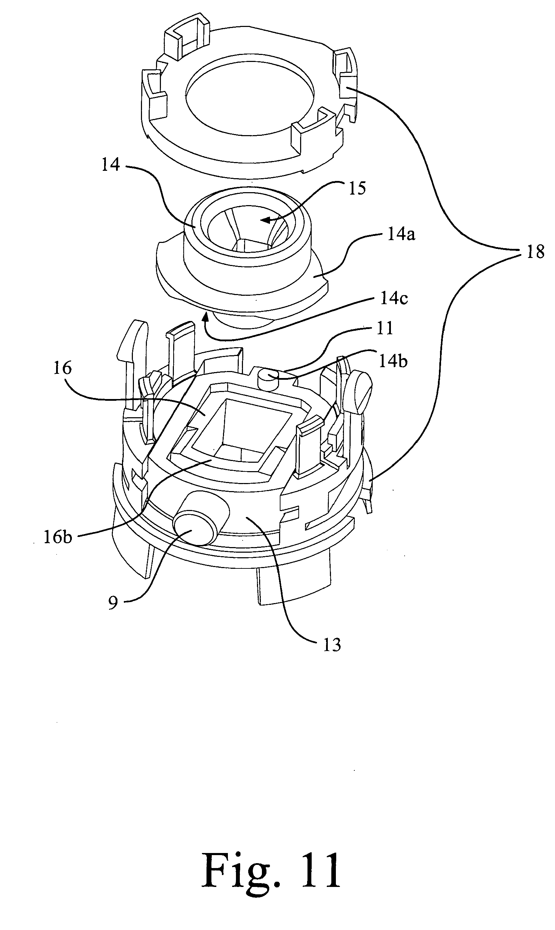

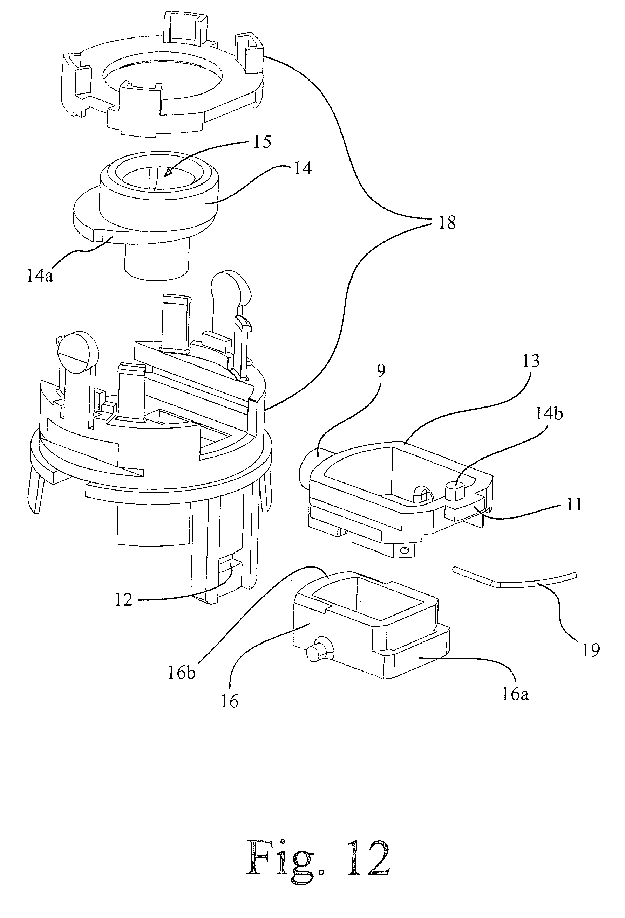

Die Fig. 7 bis 10 zeigen die Verriegelungseinheiten 4 im montierten Zustand im Detail. Bei den dort dargestellten Verriegelungseinheiten 4 handelt es sich um die Verriegelungseinheiten 4a der obersten Holmabschnitte 3a (Fig. 7, 8) und zusätzlich um die Verriegelungseinheiten 4b der nächsttieferen Holmabschnitte 3b (Fig. 9, 10). Die Ausgestaltung der jeweiligen Einzelteile lassen sich den Fig. 11 und 12 entnehmen.

Es ist zu berücksichtigen, dass alle Verriegelungseinheiten 4 mit Ausnahme der Verriegelungseinheit 4a des obersten Holmabschnitts 3a bis auf notwendige Abweichungen in der Dimensionierung, die sich an der Dimensionierung der jeweiligen Holmabschnitte 3 orientieren, baugleich sind. Die Verriegelungseinheit 4a des obersten Holmabschnitts 3a ist nur insofern unterschiedlich ausgestaltet, als dort eine Kupplungseinheit 8 in obigem Sinne nicht realisiert ist.

Es lässt sich der Darstellung in Fig. 7 entnehmen, dass die dortige Verriegelungseinheit 4a ein verstellbares Verriegelungselement 9 für die formschlüssige Verriegelung gegen den jeweils nächsttieferen Holmabschnitt, hier gegen den Holmabschnitt 3b aufweist. Dabei steht das Verriegelungselement 9 je nach Verriegelungszustand in einer Verriegelungsstellung (Fig. 7a)) oder in einer Lösestellung (Fig. 8a)).

Im Einzelnen greift das Verriegelungselement 9 zur Verriegelung mit dem nächsttieferen Holmabschnitt 3b in eine dortige Vernegelungsausformung 10 ein, die hier und vorzugsweise als einfache Bohrung im Holmabschnitt 3b ausgestaltet ist. Dabei steht das Verriegelungselement 9 entsprechend in der Verriegelungsstellung.

Grundsätzlich kann die Verriegelung saus formung 10 an unterschiedlichen Stellen an dem jeweiligen Holmabschnitt 3 vorgesehen sein. Hier und vorzugsweise ist die Verriegelungsausformung 10 bei ausgefahrener Leiter jeweils zwischen zwei Sprossen 2 angeordnet. Dies lässt sich beispielsweise der Darstellung in Fig. 6 entnehmen.

Das Verriegelungselement 9 lässt sich nun mittels der Betätigungseinrichtung 5 über die Betätigungswelle 6 in die Lösestellung verstellen, in der das Verriegelungselement 9 außer Eingriff von der Vernegelungsausformung 10 steht. Dies ist beispielsweise in Fig. 8a) dargestellt. Dabei ist es weiter vorzugsweise so, dass das Verriegelungselement 9 in die Verriegelungsstellung durch ein Federelement 19 vorgespannt ist.

Die Kupplungseinheit 8 der Verriegelungseinheit 4b ist in den Fig. 9 und 10 dargestellt. Die Kupplungseinheit 8 weist dort ein verstellbares Kupplungselement 11 für die formschlüssige Kupplung mit einer weiteren Vernegelungseinheit 4a auf, wobei das Kupplungselement 11 je nach Kupplungszustand in einer aktivierten Stellung (Fig. 10) oder in einer deaktivierten Stellung (Fig. 9) steht. Hier und vorzugsweise kommt bei der Aktivierung der Kupplungseinheit 8 das Kupplungselement 11 in Eingriff mit einer Kupplungsausformung 12 der weiteren Verriegelungseinheit 4a. Dies setzt natürlich voraus, dass, wie hier, die obere Verriegelungseinheit 4a zuvor mit der unteren Verriegelungseinheit 4b in Eingriff gebracht worden ist.

Ein Blick auf die Fig. 12 zeigt, dass das Kupplungselement 11 hier und vorzugsweise mit dem Verriegelungselement 9 einstückig verbunden ist, so dass das Lösen der Verriegelungseinheit 4 stets mit einer Aktivierung der Kupplungseinheit 8 einhergeht. Natürlich ist hier auch eine nicht-einstückige Verbindung möglich.

Im Einzelnen sind das Verriegelungselement 9 und das Kupplungselement 11 an einem Betätigungsschlitten 13 angeordnet, wobei der Betätigungsschlitten 13 im Rahmen einer Betätigung durch die Betätigungseinrichtung 5 im Wesentlichen senkrecht zu der Erstreckung des jeweiligen Holms 1 verstellbar ist. Dies lässt sich am besten einer Zusammenschau der Fig. 11 und 12 entnehmen. Grundsätzlich kann es auch vorgesehen sein, dass nur eine der Komponenten Verriegelungselement bzw. Kupplungselement an dem Betätigungsschlitten 13 angeordnet ist. Denkbar ist auch eine Realisierung zwei miteinander gekoppelter Betätigungsschlitten.

Die mechanische Schnittstelle zwischen der Betätigungswelle 6 und der jeweiligen Verriegelungseinheit 4 ist vorzugsweise dadurch realisiert, dass die Verriegelungseinheit 4 ein drehbares Betätigungselement 14 aufweist, der weiter vorzugsweise als Betätigungsexzenter ausgebildet ist. Durch die Drehung des Betätigungselements 14 ist eine Auslenkung des Verriegelungselements 9 in die Lösestellung und je nach konstruktiver Ausgestaltung eine Auslenkung des Kupplungselements 11 in die aktivierte Stellung bewirkbar. Hierfür ist das Betätigungselement 14 mit einem Exzenter 14a ausgestattet, der mit einem auf dem Betätigungsschlitten 13 angeordneten Mitnehmer 14b zusammenwirkt.

Das Betätigungselement 14 weist nun eine auf die Betätigungswellenachse ausgerichtete Mitnahmeöffnung 15 auf, mit der die Betätigungswelle 6 beim Einfahren des jeweiligen Holmabschnitts 3 in Mitnahmeeingriff kommt und durch die die Betätigungswelle 6 hindurchführbar ist. Dabei ist es vorzugsweise so, dass die Betätigungswelle 6 beim Einfahren des jeweiligen Holmabschnitts 3 axial beweglich, aber drehfest mit der Mitnahmeöffnung 15 des Betätigungselements 14 in Eingriff kommt. Hier ist die Realisierung eines entsprechenden Formschlusses zwischen der Betätigungswelle 6 und dem Betätigungselement 14 vorteilhaft. Entsprechend kann die Mitnahmeöffnung 15 einerseits und die Betätigungswelle 6 andererseits im Querschnitt nach Art eines Vierkant- oder Sechskantprofils oder nach Art eines Ritzels ausgestaltet sein. Andere Formschlussverbindungen sind denkbar.

Die Verriegelungseinheiten 4 des dargestellten Ausführungsbeispiels weisen noch eine Besonderheit auf, mit der die Betriebssicherheit der vorschlagsgemäßen Leiter weiter erhöht wird. Durch diese Besonderheit wird nämlich vermieden, dass die Verriegelungselemente 9, hier die Verriegelungsbolzen 9, bei unsachgemäßer Benutzung von außen aus den Vernegelungsausformungen 10 herausgedrückt werden.

Fig. 7a) zeigt, dass ein Herausdrücken des Verriegelungselements 9, in der dortigen Darstellung nach rechts, durch die Zugänglichkeit des Verriegelungselements 9 von außen grundsätzlich möglich wäre. Um dies zu vermeiden, weist die Verriegelungseinheit 4 ein verstellbares Blockierelement 16 auf, das eine Verstellung des Verriegelungsselements 9 aus der Verriegelungsstellung heraus blockiert, wobei eine erste Drehung des Betätigungselements 14 im Rahmen der Betätigung eine Aufhebung der Blockierung durch das Blockierelement 16 bewirkt. Dies bedeutet, dass das Blockierelement 16 stets blockierend auf das Verriegelungselement 9 wirkt, solange eine erste Drehung des Betätigungselements 14 noch nicht vollzogen ist.

Eine bevorzugte Realisierung der obigen Blockierung des Verriegelungselements 9 lässt sich der Darstellung in den Fig. 7 bis 12 entnehmen. Das Blockierelement 16 ist hier schwenkbar an dem Betätigungsschlitten 13 angelenkt. Dies zeigt beispielsweise eine Zusammenschau der Fig. 11 und 12. Die Funktionsweise des Blockierelements 16 zeigt sich am besten an der Darstellung in Fig. 7. Ohne Betätigung befindet sich das Verriegelungselement 9 in der Verriegelungsstellung und das Blockierelement 16 in der Blockierstellung. Dabei ist das Blockierelement in Fig. 7a) nach unten verschwenkt. Wird nun auf das Verriegelungselement 9 eine Kraft in Fig. 7a) nach rechts ausgeübt, so kommt eine Blockierfläche 16a des Blockierelements 16 in Eingriff mit einem Absatz 17 des Gehäuses 18 der Verriegelungseinheit 4a. Durch die Anlenkung des Blockierelements 16 an dem Betätigungsschlitten 13 ist die Verstellung des Betätigungsschlittens 13 blockiert.

Erst bei einher ersten Drehung des Betätigungselements 14 kommt eine Kulisse 14c (Fig. 11) in Eingriff mit einer Führungsfläche 16b des Blockierelements 16 und drückt das Blockierelement 16 in die in Fig. 7b) dargestellte Position. Dies erfolgt vorzugsweise gegen die Kraft eines nicht dargestellten Federelements. Anschließend ist es möglich, den Betätigungsschlitten 13 in Fig. 7b) nach rechts zu verschieben. Dabei läuft die Blockierfläche 16a des Blockierelements 16 an dem Absatz 17 des Gehäuses 18 vorbei.

Die obige Lösung zur Blockierung des Verriegelungselements 9 ist einfach und robust. Zur Reduzierung der Teileanzahl wäre es denkbar, das Blockierelement 16 als Zunge oder dergleichen einstückig mit dem Betätigungsschlitten 13 zu verbinden.

Im Folgenden wird nun das schrittweise Einfahren der Holmabschnitte 3a, 3b anhand der Fig. 7 bis 10 erläutert.

Ausgehend von dem in Fig. 7a) dargestellten, unbetätigten Zustand bewirkt eine erste Drehung des Dreh-Betätigungsgriffs 7 in der in Fig. 7b) gezeigten Drehrichtung zunächst ein Aufheben der Blockierung durch das Blockierelement 16. Bei weiterer Betätigung kommt es zu einem Eingriff des Exzenters 14a mit dem Mitnehmer 14b und damit zu einer Verstellung des Verriegelungselements 9 in die Lösestellung (Fig. 8a)).

Während der Holmabschnitt 3a zusammen mit der Verriegelungseinheit 4a in den Holmabschnitt 3b eingefahren wird, löst der Benutzer die Dreh-Betätigungsgriffe 7, die daraufhin in ihre Ausgangsstellung zurückschnappen. Dies ist in Fig. 8b) gezeigt. Dabei gleitet das in der Lösestellung befindliche Verriegelungselement 9 an der Innenwand des Holmabschnitts 3a. Auf diese Weise ist gewährleistet, dass eine Verriegelungseinheit 4 eines nicht ausgefahrenen Holmabschnitts 3, der ja stets an der Innenwand eines Holabschnitts anliegt, stets gelöst ist. Dies gilt grundsätzlich für alle weiteren Verriegelungseinheiten 4 entsprechend, wobei bei den weiteren Verriegelungseinheiten 4 zusätzlich auch die dort vorhandene Kupplungseinheit 8 im aktivierten Zustand gehalten wird.

Nach dem Einfahren des Holmabschnitts 3a kommt die Verriegelungseinheit 4a in Eingriff mit der Verriegelungseinheit 4b des nächsttieferen Holmabschnitts 3b. Zuvor durchdringt die Betätigungswelle 6 noch das Betätigungselement 14 der Verriegelungseinheit 4b, so dass eine erste Betätigung zunächst einmal das Aufheben der Blockierung durch das dortige Blockierelement 16 bewirkt (Fig. 9b)).

Bei weiterer Betätigung wird nun das Verriegelungselement 9 der Verriegelungseinheit 4b in die Lösestellung überführt (Fig. 10a)). Gleichzeitig kommt das Kupplungselement 11 der Verriegelungseinheit 4b in Eingriff mit der Kupplungsausformung 12 der Verriegelungseinheit 4a. Nun lässt sich der Holmabschnitt 3b in den nächsttieferen Holmabschnitt 3c einfahren (Fig. 10b)). Dadurch, dass während dieses Einfahrens das Verriegelungselement 9 der Verriegelungseinheit 4b an der Innenseite des Holmabschnitts 3c entlang gleitet, verbleibt das Kupplungselement 11 in der aktivierten Stellung. Die beiden Verriegelungseinheiten 4a, 4b sind bis auf weiteres miteinander gekoppelt.

Die obige Vorgehensweise lässt sich nun nacheinander für die nächsttieferen Holmabschnitte 3d,e durchführen, bis die in Fig. 4a) dargestellte eingefahrene Stellung der Leiter insgesamt erreicht ist.

Das Ausfahren der Leiter aus der in Fig. 4a) dargestellten, eingefahrenen Stellung heraus lässt sich einfach in umgekehrter Weise realisieren, ohne dass es allerdings einer Betätigung durch die Betätigungseinrichtung 5 bedarf. Zum Ausfahren ist es lediglich erforderlich, das Sprossenpaket aus den Sprossen 2 anzuheben. Dadurch, dass alle Verriegelungseinheiten 4 wie oben erläutert miteinander gekoppelt sind, ist ausschließlich das Ausfahren der Holmabschnitte 3e möglich. Dabei schnappt das federvorgespannte Verriegelungselement 9 der Verriegelungseinheit 4e in die entsprechende Verriegelungsausformung 10, was mit einer Überführung des Kupplungselements 11 der Verriegelungseinheit 4e in die deaktivierte Stellung einhergeht. Damit ist es nun möglich, dass der nächsthöhere Holmabschnitt 3d in gleicher Weise ausgefahren wird. Diese Vorgehensweise setzt sich fort, bis die gewünschte Teleskopierlage der Leiter erreicht ist. Eine Fehlbedienung der Leiter ist weitgehend ausgeschlossen.

## Patentansprüche

1. Teleskopierbare Leiter mit zwei nebeneinanderliegenden Holmen (1) und zwischen den Holmen (1) angeordneten Sprossen (2), wobei die Holme (1) jeweils aus einer Mehrzahl von im Wesentlichen rohrförmigen, teleskopartig ineinanderlaufenden Holmabschnitten (3) bestehen, wobei nebeneinanderliegende Holmabschnitte (3) jeweils über eine Sprosse (2) miteinander verbunden sind, **dadurch gekennzeichnet,**
**dass** die in einen jeweils nächsttieferen Holmabschnitt (3) einfahrbaren Holmabschnitte (3) jeweils eine Verriegelungseinheit (4) aufweisen, mit denen die Holmabschnitte (3) gegen den jeweils nächsttieferen Holmabschnitt (3) in der jeweils ausgefahrenen Stellung verriegelbar sind, dass den beiden Holmen (1) jeweils eine manuelle Betätigungseinrichtung (5) zum Lösen der Verriegelungseinheiten (4) zugeordnet sind und dass die Betätigungseinrichtung (5) eine Betätigungswelle (6) aufweist, die längs innerhalb des jeweiligen Holms (1) verläuft und die insbesondere in Abhängigkeit von der Teleskopierlage der Leiter in Eingriff mit mindestens einer Verriegelungseinheit (4) steht oder bringbar ist.

2. Leiter nach Anspruch 1, **dadurch gekennzeichnet, dass** die Verriegelungseinheiten (4) starr mit den Holmabschnitten (3) im Übrigen verbunden sind.

3. Leiter nach Anspruch 1 oder 2, **dadurch gekennzeichnet, dass** die Betätigungseinrichtung (5) am oberen Ende des jeweiligen Holms (1) einen Dreh-Betätigungsgriff (7) o. dgl. aufweist, der antriebstechnisch mit der Betätigungswelle (6) gekoppelt ist.

4. Leiter nach einem der vorhergehenden Ansprüche, **dadurch gekennzeichnet, dass** sich die Betätigungswelle (6) vom oberen Ende des jeweiligen Holms (1) mit einem freien Ende (6a) nach unten hin erstreckt, vorzugsweise, dass die Betätigungswelle (6) im obersten Holmabschnitt (3a) axialfest und drehbar gelagert ist.

5. Leiter nach einem der vorhergehenden Ansprüche, **dadurch gekennzeichnet, dass** die Betätigungswelle (6) insbesondere hinsichtlich ihrer Länge so ausgelegt ist, dass sie mit der Verriegelungseinheit (4) des jeweils obersten ausgefahrenen Holmabschnitts (3), und nicht mit Verriegelungseinheiten (4) anderer ausgefahrener Holmabschnitte (3) in Eingriff steht.

6. Leiter nach einem der vorhergehenden Ansprüche, **dadurch gekennzeichnet, dass** beim Einfahren eines Holmabschnitts (3) die Betätigungswelle (6) in Eingriff mit der Verriegelungseinheit (4) des nächsttieferen Holmabschnitts (3) kommt, vorzugsweise, dass dabei die Betätigungswelle (6) mit ihrem freien Ende (6a) diese Verriegelungseinheit (4) des nächsttieferen Holmabschnitts (3) durchdringt.

7. Leiter nach einem der vorhergehenden Ansprüche, **dadurch gekennzeichnet, dass** die Verriegelungseinheiten (4) der Holmabschnitte (4), ggf. mit Ausnahme der Verriegelungseinheiten (4) der obersten Holmabschnitte (4a), jeweils eine aktivierbare Kupplungseinheit (8) für deren Kupplung mit einer weiteren Verriegelungseinheit (4), insbesondere mit der Verriegelungseinheit (4) des nächsthöheren, eingefahrenen Holmabschnitts (3), aufweist, vorzugsweise, dass das Lösen einer Verriegelungseinheit (4) durch die Betätigungseinrichtung (5) mit einer Aktivierung der zugeordneten Kupplungseinheit (8) einhergeht.

8. Leiter nach einem der vorhergehenden Ansprüche, **dadurch gekennzeichnet, dass** beim Einfahren eines Holmabschnitts (3) dessen Verriegelungseinheit (4) in Eingriff mit der Verriegelungseinheit (4) des nächsttieferen Holmabschnitts (3) kommt und dass ein anschließendes Lösen der unteren der beiden Verriegelungeinheiten (4) durch die Betätigungseinrichtung (5) ein Kuppeln der beiden Verriegelungseinheiten (4) miteinander und damit ein Kuppeln der zugeordneten Holmabschnitte (3) miteinander bewirkt.

9. Leiter nach einem der vorhergehenden Ansprüche, **dadurch gekennzeichnet, dass** eine Verriegelungseinheit (4) eines Holmabschnitts (4), der nicht in der ausgefahrenen Stellung steht, stets gelöst ist und dass die Kupplungseinheit (8) dabei entsprechend stets aktiviert ist.

10. Leiter nach einem der vorhergehenden Ansprüche, **dadurch gekennzeichnet, dass** die Verriegelungseinheiten (4) jeweils ein verstellbares Verriegelungselement (9) für die formschlüssige Verriegelung gegen den jeweils nächsttieferen Holmabschnitt (3) aufweisen, dass das Verriegelungselement (9) je nach Verriegelungszustand in einer Verriegelungsstellung oder in einer Lösestellung steht und zur Verriegelung mit dem nächsttieferen Holmabschnitt (3), in der Verriegelungsstellung stehend, in eine dortige Verriegelungsausformung (10), insbesondere eine Bohrung, eingreift, vorzugsweise, dass die Verriegelungsausformungen (10) bei ausgefahrener Leiter jeweils zwischen zwei Sprossen (2) angeordnet sind.

11. Leiter nach Anspruch 7 und ggf. nach einem der Ansprüche 8 bis 10, **dadurch gekennzeichnet, dass** die Kupplungseinheit (8) der jeweiligen Verriegelungseinheit (4) ein verstellbares Kupplungselement (11) für das formschlüssige Kuppeln mit einer weiteren Verriegelungseinheit (4) aufweist und dass das Kupplungselement (11) je nach Kupplungszustand in einer aktivierten Stellung oder in einer deaktivierten Stellung steht, vorzugsweise, dass bei der Aktivierung der Kupplungseinheit (8) das Kupplungselement (11) in Eingriff mit einer Kupplungsausformung (12) der weiteren Verriegelungseinheit (4) kommt oder bringbar ist.

12. Leiter nach einem der vorhergehenden Ansprüche, **dadurch gekennzeichnet, dass** die Verriegelungseinheit (4) ein drehbares Betätigungselement (14), insbesondere einen Betätigungsexzenter, aufweist, durch dessen Drehung eine Auslenkung des Verriegelungselements (9) in die Lösestellung und/oder eine Auslenkung des Kupplungselements (11) in die aktivierte Stellung bewirkbar ist.

13. Leiter nach einem der vorhergehenden Ansprüche, **dadurch gekennzeichnet, dass** das Betätigungselement (14) eine auf die Betätigungswellenachse ausgerichtete Mitnahmeöffnung (15) aufweist, mit der die Betätigungswelle (6) beim Einfahren des jeweiligen Holmabschnitts (3) in Mitnahmeeingriff kommt und durch die die Betätigungswelle (6) hindurchführbar ist.

14. Leiter nach Anspruch 13, **dadurch gekennzeichnet, dass** die Betätigungswelle (6) beim Einfahren des jeweiligen Holmabschnitts (3) axial beweglich, aber drehfest mit der Mitnahmeöffnung (15) des Betätigungselements (14) in Eingriff kommt, vorzugsweise, dass die Mitnahmeöffnung (15) und die Betätigungswelle (6) im Querschnitt nach Art eines Vierkant- oder Sechskantprofil oder nach Art eines Ritzels ausgestaltet sind.

15. Leiter nach einem der vorhergehenden Ansprüche, **dadurch gekennzeichnet, dass** die Verriegelungseinheit (4) ein verstellbares Blockierelement (16) aufweist, das eine Verstellung des Verriegelungselements (9) aus der Verriegelungsstellung heraus blockiert, vorzugsweise, dass eine erste Drehung des Betätigungselements (14) im Rahmen der Betätigung eine Aufhebung der Blockierung durch das Blockierelement (16) bewirkt, weiter vorzugsweise, dass das Blockierelement (16) schwenkbar an dem Betätigungsschlitten (13) angelenkt ist.
